# EUROPEAN PATENT SPECIFICATION

(11) **EP 2 364 008 B1**
(45) Date of publication and mention of the grant of the patent: **09.05.2012**
(21) Application number: 10305195.9
(22) Date of filing: 26.02.2010
(51) Int. Cl.: H04M 3/22, H04B 10/08

(54) **Method to assign a customer premises equipment to a subscriber's data record, demarcation point unit, and network element**
Verfahren zur Zuweisung von Teilnehmerendgeräten an die Datenaufzeichnung eines Teilnehmers, Vermarkungspunkteinheit und Netzwerkelement
Procédé pour attribuer un équipement sur le site d'un client à un registre de données d'un abonné, une unité de point de délimitation et un élément de réseau

(43) Date of publication of application: 07.09.2011
(73) Proprietor: Alcatel Lucent, 75007 Paris (FR)
(72) Inventor: Hehmann, Joerg, 71263, Weil der Stadt (DE); Straub, Michael, 75433, Maulbronn (DE)
(74) Representative: Brose, Gerhard

(56) References cited:
- EP-A1- 1 748 580
- EP-A1- 1 986 351
- EP-A1- 2 015 480
- WO-A1-2007/048226

## Description

The invention relates to a method to assign a customer premises equipment to a subscriber's data record according to the preamble of claim 1, to a demarcation point unit according to the preamble of claim 4, and to a network element for a central office, according to the preamble of claim 5.

Such telecommunication's networks are well known, for example from EP 1 986 351 A1, and EP 2 015 480 A1.

Both, optical and wireless access networks normally are point-to-multipoint networks. Each customer has a connection point, where he or she can connect whatever customer premises equipment like simple telephones, servers, or multimedia devices. Such connecting equipment is being done by the customer himself or herself and can also be changed at whatever time. There is a need to register the used equipment in the central office of the network operator and to unambiguously assign it to a subscriber's data record.

To this end it is known that the customer performs a certain procedure, in the course of which a code received from the operator is to be entered. Such registration procedure is time consuming, cumbersome and error-prone.

The invention deals with the problem of providing a method and respective devices to assign a customer premises equipment to a subscriber's data record registered in the central office of the network operator.

This problem according to the invention is solved by a method according to the teaching of claim 1, by a network terminating unit according to the teaching of claim 4, and by a network element for a central office, according to the teaching of claim 5.

The invention makes use of two circumstances:
On the one hand network operators often insist on terminating their network with each customer by a device being separated from any customer's devices and being in their own responsibility. It is known also that such units, then called demarcation point units, also are assigned unambiguous and individual identifiers. Such demarcation point units are installed under the responsibility of the network operator, who thus knows the customer in whose location such demarcation point unit is installed. The classical network terminating elements called Network Termination thus is separated into two parts. One part, the Optical Network Termination, physically is terminating the network, but is in the responsibility of the subscriber; the other part, the Demarcation Point Unit, is terminating the responsibility of the operator.

On the other hand any customer premises equipment foreseen for connecting two an optical access line nowadays is built such that, when in operation, it regularly reports the received signal amplitude to the central office, to which it is connected.

The inventors' idea now to impose the demarcation point unit's identifier the signal coming from the central office to the customer's device by influencing the signal amplitude of this signal and have it reported to the central office. Of course the chronological sequence of the imposing of the identifier has to be adapted to the reporting intervals of the customer's device.

Further embodiments of the invention can be found in the subclaims and in the accompanying description.

In the following the invention will be described with reference to the accompanying drawling, in which
- Figure 1: shows a telecommunication's network, in which a method according to the invention can be performed.
- Figure 2: shows a demarcation point unit according to the invention.
- Figure 3: shows a central office including a network analyser as an example of a network element according to the invention.

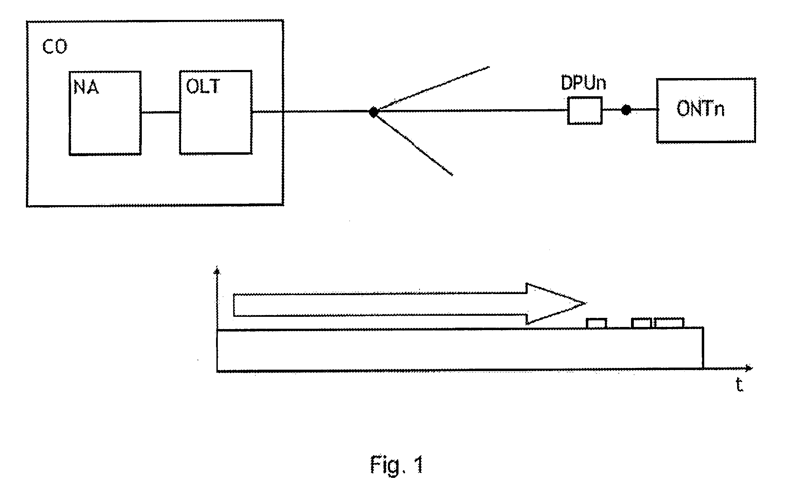

Figure 1 shows both, a telecommunication's network, and a diagram representing the signal flow therein.

The telecommunication's network includes a central office CO, an access network, not labeled, a demarcation point unit DPUn representing one of a multiple of network terminating units, and an optical network termination unit ONTn representing a subscriber's customer premises equipment.

The central office CO here is shown as including an optical line termination unit OLT and a network analyser NA.

The optical line termination unit OLT performs the conversion between optical and electrical part and the transmission technological functions like adapting power levels.

The network analyzer NA performs some kind of network operation tasks.

It is to be noticed, that in practical realization the network analyzer NA as mentioned above often is spatially separated from the optical line termination unit OLT and then mostly is a network element in common to more than one optical line termination unit OLT. This does not influence the idea of the invention.

The signal flow represented thereunder is a signal flow from the optical line termination unit OLT within the central office CO to the optical network termination unit ONTn. From the demarcation point unit DPUn on additional signal elements are added imposed by the demarcation point unit DPUn.

This signal flow representation is by no means to scale : The duration of either of the imposed signal elements has nothing to do with the propagation time it undergoes. The clock of the signal from the optical line termination unit OLT is such high in relation to the clock of the imposed signal elements from the demarcation point unit DPUn, that it is not even represented. The relation between the amplitude of the signal from the optical line termination unit OLT to the imposed signal elements from the demarcation point unit DPUn is small, namely in the range of some few percents, not more than 20% but rather in the range of 5%. The attenuation of the signal its way from the optical line termination unit OLT to the optical network termination unit ONTn is not represented either.

The additional signal elements imposed by the demarcation point unit DPUn represent the unambiguous and individual identifier assigned to exactly this demarcation point unit DPUh. It thus represents a digital signature proper to this demarcation point unit DPUn.

The amplitude of these additional signal elements on the one hand has to be chosen such that it can be clearly detected by a transceiver parameter monitor allegedly being part of the network termination unit ONTn. On the other hand this amplitude is to be kept such low that the regular data flow between the optical line termination unit OLT and the optical network termination unit ONTn is not disturbed.

The same considerations concerning the relation between the amplitude of the signal from the optical line termination unit OLT and the imposed signal elements from the demarcation point unit DPUn apply when the signal elements from the demarcation point unit DPUn are imposed by attenuating the signal from the optical line termination unit OLT within the demarcation point unit DPUn.

Increasing the overall signal amplitude requires an optical signal source like a laser or a light emitting diode. Reducing the overall signal amplitude requires some kind of a switchable attenuator like a coupler with a coupling factor that can be influenced or either of the terminations of which can be switched.

The clock with which such signature is to be imposed onto the signal flow has to be such low, that it is ensured that the transceiver parameter monitor in the optical network termination unit ONTn while performing its monitoring and reporting task for sure also monitors and reports the variations recognized. This clock therefor has to be adapted to the reporting intervals of such transceiver parameter monitor such that the reporting intervals are not shorter than one bit of the signature imposed.

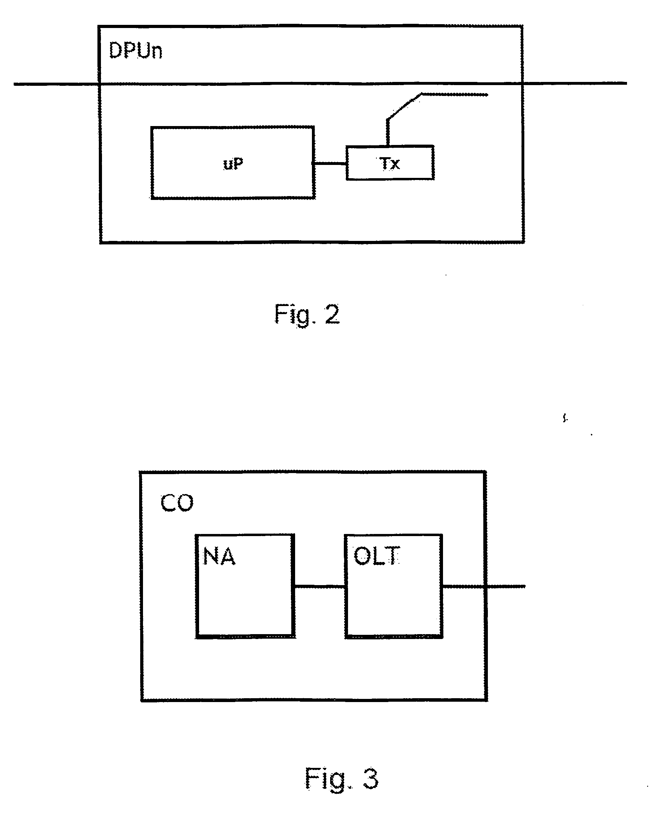

Figure 2 shows an example of such demarcation point unit DPUn according to the invention. The optical line between the central office CO and the network termination unit ONTn within the subscriber's customer premises equipment is looped through through this demarcation point unit DPUn, shown as draw through line. The demarcation point unit DPUn further includes a control element, here designated as uP, a usual abbreviation of a microprocessor, an optical transmitter Tx, and an optical coupler coupling the optical transmitter Tx to the looped through optical line.

The use of a microprocessor uP as control element is justified by other tasks such demarcation point unit DPUn normally is to perform. To this end it might also be coupled to the looped through optical line with receiving means for receiving data from either of both directions or with means for also transmitting towards the central office.

In principle the invention works, when the demarcation point unit DPUn continuously imposes its signature on the signal flow. Depending on the intelligence provided by the control element and on the way it is coupled to the optical line, the imposing the signature could be limited to short periods at the beginning of communications or on demand from the central office.

Figure 3 shows a central office CO including a network analyzer NA as an example of a network element according to the invention.

As already previously mentioned the central office CO here is shown as including an optical line termination unit OLT and network analyzer NA.

The optical line termination unit OLT performs the conversion between optical and electrical part and the transmission technological functions like adapting power levels.

The network analyzer NA performs some kind of network operation tasks.

The optical line termination unit OLT needs not to vary from known such optical line termination units. There is only a need to adapt the network analyzer NA in the central office, such that from the parameters reported from the customer premises' equipment, especially the received power levels, the signature of the assigned known demarcation point unit DPUn can be derived and whereby the customer premises equipment can be assigned to the respective subscriber's data record.

As already mentioned it is to be noticed, that in practical realization the network analyser NA as mentioned above often is spatially separated from the optical line termination unit OLT and then mostly is a network element in common to more than one optical line termination unit OLT and more than one central office.

## Claims

1. Method for a telecommunication's network with a central office (CO), access network, a multiple of demarcation point its (DPUn) and customer premises equipment (ONTn) connected thereto, to assign a customer premises equipment (ONTn) to a subscriber's data record register in the central office (CO), **characterized in, that** when a customer premises equipment (ONTn) rep ts received signal amplitudes in regular reporting intervals to the central office (CO), a customer premises equipment (ONTn) is assigned to a subscriber's data record by uniquely influencing the signal amplitude by the demarcation point unit (DPUn) assigned to the customer premises equipment (ONTn), the assignment of which to a certain subscriber's data record is known in the central office (CO), where the influencing of the signal amplitude is performed such that a digital signature individually assigned to the demarcation point unit (DPUn) is imprinted on the signal amplitude, where the bit clock underlying the signature is such that one bit of the signature imposed is at the longest as long as a reporting interval, and that the central office (CO) recovers the signature of the demarcation point unit (DPUn) from the sequence of signal amplitudes reported from the customer premises equipment (ONTn) and derives therefrom the assignment between customer premises equipment (ONTn) and subscriber's data record.

2. Method according to claim 1, **characterized in, that** the demarcation point unit (DPUn) influences the signal amplitude by additively adding the signature as supplementary signal with an amplitudes being small compared to the signal amplitudes.

3. Method according to claim 1, **characterised in, that** the demarcation point unit (DPUn), influences the signal amplitude by attenuating the signal amplitude by small amount according to the signature.

4. Demarcation point unit (DPUn) for a telecommunication's network with a central office (CO), an access network, a multiple of demarcation point units (DPUn) and customer premises equipment (ONTn) connected thereto, where customer premises equipment (ONTn) reports received signal amplitudes in regular reporting intervals to the central office (CO), **characterized in, that** the demarcation point unit (DPUn) is built such that the demarcation point unit (DPUn) is in position to uniquely influence the amplitude of a signal from the central office (CO) to a customer premises equipment (ONTn) connected to the demarcation point unit, where the influencing of the signal amplitude is performed such that a digital signature individually assigned to the demarcation point unit (DPUn) is imprinted on the signal amplitude using a bit clock underlying the signature that is such that one bit of the signature imposed is at the longest as long as a reporting interval.

5. Network element (NA) for a central office (CO) for a telecommunication's network with a central office (CO), an access network, a multiple of demarcation point units (DPUn) and customer premises equipment (ONTn) connected thereto, **characterized in, that** the network element (NA) is built such that the network element (NA) is in position to recover a signature of a demarcation point unit (DPUn) from the sequence of signal amplitudes reported from a customer premises equipment (ONTn), where the signature imprinted is such that one bit of the signature is at the longest as long as a reporting interval, and to derive therefrom the assignment between customer premises equipment (ONTn) and subscriber's data record.

## Patentansprüche

1. Verfahren für ein Telekommunikationsnetzwerk mit einer Vermittlungsstelle (CO), einem Zugangsnetzwerk, mehrfachen Abgrenzungspunkteinheiten (DPUn) und an diese angeschlossenen Teilnehmerendgeräten (ONTn) für die Zuweisung eines Teilnehmerendgeräts (ONTn) an eine in der Vermittlungsstelle (CO) registrierte Datenaufzeichnung eines Teilnehmers, **dadurch gekennzeichnet, dass**, wenn ein Teilnehmerendgerät (ONTn) empfangene Signalamplituden in regelmäßigen Intervallen an die Vermittlungsstelle (CO) meldet, ein Teilnehmerendgerät (ONTn) der Datenaufzeichnung eines Teilnehmers durch eindeutiges Beeinflussen der Signalamplitude durch die dem Teilnehmergerät (ONTn) zugewiesene Abgrenzungspunkteinheit (DPUn) zugewiesen wird, dessen Zuweisung an eine Datenaufzeichnung eines bestimmten Teilnehmers in der Vermittlungsstelle (CO) bekannt ist, wobei das Beeinflussen der Signalamplitude derart erfolgt, dass der Signalamplitude eine der Abgrenzungspunkteinheit (DPUn) individuell zugewiesene digitale Signatur aufgeprägt wird, wobei der der Signalamplitude der der Signatur zugrunde liegende Bittakt aufgeprägt wird, wobei der der Signatur zugrunde liegende Bittakt derart ist, dass ein Bit der aufgezwungenen Signatur höchstens so lang wie eine Meldeintervall ist, und dass die Vermittlungsstelle (CO) die Signatur der Abgrenzungspunkteinheit (DPUn) aus der von dem Teilnehmerendgerät (ONTn) gemeldeten Folge von Signalamplituden rückgewinnt und daraus die Zuweisung zwischen dem Teilnehmerendgerät (ONTn) und der Datenaufzeichnung eines Teilnehmers ableitet.

2. Verfahren nach Anspruch 1, **dadurch gekennzeichnet, dass** die Abgrenzungspunkteinheit (DPUn) die Signalamplitude durch additives Hinzufügen der Signatur als Zusatzsignal, dessen Amplitude im Vergleich zur Signalamplitude klein ist, beeinflusst.

3. Verfahren nach Anspruch 1, **dadurch gekennzeichnet, dass** die Abgrenzungspunkteinheit (DPUn) die Signalamplitude durch Dämpfen der Signalamplitude um eine kleine Menge gemäß der Signatur beeinflusst.

4. Abgrenzungspunkteinheit (DPUn) für ein Telekommunikationsnetzwerk mit einer Vermittlungsstelle (CO), einem Zugangsnetzwerk, mehrfachen Abgrenzungspunkteinheiten (DPUn) und an diese angeschlossenen Teilnehmerendgeräten (ONTn), wobei das Teilnehmerendgerät (ONTn) empfangene Signalamplituden in regelmäßigen Intervallen an die Vermittlungsstelle (CO) meldet, **dadurch gekennzeichnet, dass** die Abgrenzungspunkteinheit (DPUn) derart gestaltet ist, dass die Abgrenzungspunkteinheit (DPUn) in der Lage ist, die Amplitude eines Signals von der Vermittlungsstelle (CO) an ein an die Abgrenzungspunkteinheit angeschlossenes Teilnehmerendgerät (ONTn) eindeutig zu beeinflussen, wobei das Beeinflussen der Signalamplitude derart erfolgt, dass der Signalamplitude eine der Abgrenzungspunkteinheit (DPUn) individuelle zugewiesene digitale Signatur unter Verwendung eines der Signatur zugrunde liegenden Bittaktes, welcher derart ist, dass ein Bit der aufgezwungenen Signatur höchstens so lang wie eine Meldeintervall ist, aufgeprägt wird.

5. Netzwerkelement (NA) für eine Vermittlungsstelle (CO) für ein Telekommunikationsnetzwerk mit einer Vermittlungsstelle (CO), einem Zugangsnetzwerk, mehrfachen Abgrenzungspunkteinheiten (DPUn) und an diese angeschlossenen Teilnehmerendgeräten (ONTn), **dadurch gekennzeichnet, dass** das Netzwerkelement (NA) derart gestaltet ist, dass das Netzwerkelement (NA) in der Lage ist, eine Signatur einer Abgrenzungspunkteinheit (DPUn) aus der von einem Teilnehmerendgerät (ONTn) gemeldeten Folge von Signalamplituden rückzugewinnen, wobei die aufgeprägte Signatur derart ausgebildet ist, dass ein Bit der Signatur höchstens so lang wie ein Meldeintervall ist, und daraus die Zuweisung zwischen dem Teilnehmerendgerät (ONTn) und der Datenaufzeichnung eines Teilnehmers abzuleiten.

## Revendications

1. Procédé pour un réseau de télécommunication avec un central (CO), un réseau d'accès, de multiples unités de point de démarcation (DPUn) et un équipement des locaux d'abonné (ONTn) connecté à celles-ci, pour affecter un équipement des locaux d'abonné (ONTn) à un enregistrement de données d'abonné enregistré dans le central (CO), **caractérisé en ce que** lorsqu'un équipement des locaux d'abonné (ONTn) rapporte les amplitudes du signal reçu dans des intervalles de rapport réguliers au central (CO), un équipement des locaux d'abonné (ONTn) est affecté à un enregistrement de données d'abonné en exerçant une influence exclusivement sur l'amplitude de signal par l'unité de point de démarcation (DPUn) affectée à l'équipement des locaux d'abonné (ONTn), dont l'affectation à un enregistrement de données d'un certain abonné est connue dans le central (CO), l'influence sur l'amplitude de signal étant exercée de sorte qu'une signature numérique affectée individuellement à l'unité de point de démarcation (DPUn) soit imprimée sur l'amplitude de signal, l'horloge de bit sous-jacente à la signature étant telle qu'un bit de la signature imposée est, au maximum, aussi longue qu'un intervalle de rapport, et que le central (CO) récupère la signature de l'unité de point de démarcation (DPUn) à partir de la séquence d'amplitudes de signal rapportées par l'équipement des locaux d'abonné (ONTn) et en déduit l'affectation entre l'équipement des locaux d'abonné (ONTn) et l'enregistrement de données d'abonné.

2. Procédé selon la revendication 1, **caractérisé en ce que** l'unité de point de démarcation (DPUn) exerce une influence sur l'amplitude de signal en ajoutant de manière additive la signature comme signal supplémentaire avec une amplitude faible par rapport à l'amplitude de signal.

3. Procédé selon la revendication 1, **caractérisé en ce que** l'unité de point de démarcation (DPUn) exerce une influence sur l'amplitude de signal en atténuant l'amplitude de signal selon une faible quantité en fonction de la signature.

4. Unité de point de démarcation (DPUn) pour un réseau de télécommunication avec un central (CO), un réseau d'accès, de multiples unités de point de démarcation (DPUn) et un équipement des locaux d'abonné (ONTn) connecté à celles-ci, l'équipement des locaux d'abonné (ONTn) rapportant les amplitudes du signal reçu dans des intervalles de rapport réguliers au central (CO), **caractérisée en ce que** l'unité de point de démarcation (DPUn) est construite de sorte que l'unité de point de démarcation (DPUn) soit en position pour exercer une influence exclusivement sur l'amplitude d'un signal entre le central (CO) et un équipement des locaux d'abonné (ONTn) connecté à l'unité de point de démarcation, l'influence sur l'amplitude de signal étant exercée de sorte qu'une signature numérique affectée individuellement à l'unité de point de démarcation (DPUn) soit imprimée sur l'amplitude de signal en utilisant une horloge de bit sous-jacente à la signature qui est telle qu'un bit de la signature imposée est, au maximum, aussi longue qu'un intervalle de rapport.

5. Élément de réseau (NA) pour un central (CO) pour un réseau de télécommunication avec un central (CO), un réseau d'accès, de multiples unités de point de démarcation (DPUn) et un équipement des locaux d'abonné (ONTn) connecté à celles-ci, **caractérisé en ce que** l'élément de réseau (NA) est construit de sorte que l'élément de réseau (NA) soit en position pour récupérer une signature d'une unité de point de démarcation (DPUn) à partir de la séquence d'amplitudes de signal rapportées par un équipement des locaux d'abonné (ONTn), la signature imprimée étant telle qu'un bit de la signature est, au maximum, aussi longue qu'un intervalle de rapport, et pour en déduire l'affectation entre l'équipement des locaux d'abonné (ONTn) et l'enregistrement de données d'abonné.
